# DEMANDE DE BREVET EUROPEEN

(11) **EP 4 835 344 A1**
(43) Date de publication de la demande: **04.11.2026**
(21) Numéro de dépôt: 26162178.3
(22) Date de dépôt: 04.03.2026
(51) Int. Cl.: F17C 3/00

(54) **DISPOSITIF DE STOCKAGE ET DE FOURNITURE DE FLUIDE, VÉHICULE ET PROCÉDÉ CORRESPONDANTS**

(30) Priorité: 30.04.2025 FR 2504581
(71) Demandeur: L'Air Liquide, Société Anonyme pour l'Etude et l'Exploitation des Procédés Georges Claude, 75007 Paris (FR)
(72) Inventeur: PENNEC, Yann, 75007 Paris (FR); BOUIN, Marius, 75007 Paris (FR); MILLET, Emilie, 75007 Paris (FR)
(74) Mandataire: Air Liquide

(57) **Abrégé**

L'invention concerne un dispositif de stockage et de fourniture de fluide comprenant un réservoir (10) cryogénique avec une enveloppe (11) interne et une enveloppe (12) externe et un espacement isolé sous vide, une circuiterie avec une conduite (5) de remplissage comprenant deux extrémités aval (50, 51) reliées respectivement aux partie supérieure et inférieure de l'enveloppe (11) interne et munies chacune d'une vanne (35, 25) de régulation de débit, une conduite (3) de retour de gaz reliée à la partie supérieure de l'enveloppe (11) interne et à un système de récupération du gaz, une conduite (6, 7) d'alimentation comprenant une extrémité amont reliée à l'enveloppe (11) interne et une extrémité aval destinée à être reliée à un utilisateur du fluide du réservoir (10) et au moins un échangeur (36; 66) de chaleur configuré pour contrôler la température du fluide soutiré, une première conduite (4) de dérivation reliant la conduite (3) de retour de gaz à la conduite (6, 7) d'alimentation et munie d'au moins une vanne (16) de dérivation pour permettre le transfert de fluide de la conduite (3) de retour de gaz vers la conduite (7) d'alimentation simultanément à un remplissage du réservoir via la conduite (5) de remplissage.

## Description

L'invention concerne un dispositif de stockage et de fourniture de fluide, un véhicule comprenant un tel dispositif et un procédé correspondant.

L'invention concerne plus particulièrement un dispositif de stockage et de fourniture de fluide comprenant un réservoir de fluide cryogénique, le réservoir comportant une enveloppe interne définissant un volume de stockage de fluide cryogénique et une enveloppe externe disposée autour de l'enveloppe interne avec un espacement isolé thermiquement sous vide, le dispositif comprenant une circuiterie munie d'un ensemble de conduites et d'un ensemble de vannes, la circuiterie étant configurée pour permettre le transfert de fluide depuis ou vers le réservoir, dans lequel, l'ensemble de conduites comprend une conduite de remplissage comprenant une extrémité amont destinée à être reliée à une source de fluide cryogénique et deux branches parallèles formant deux extrémités aval reliées respectivement aux partie supérieure et inférieure de l'enveloppe interne, les deux branches parallèles étant munie chacune d'une vanne de régulation de débit, l'ensemble de conduites comprenant en outre une conduite de retour de gaz comprenant une extrémité amont reliée à la partie supérieure de l'enveloppe interne et une extrémité aval destinée à être reliée à un système de récupération du gaz, l'ensemble de conduites comprenant en outre une conduite d'alimentation comprenant une extrémité amont reliée à l'enveloppe interne et une extrémité aval destinée à être reliée à un utilisateur du fluide du réservoir, la conduite d'alimentation comprenant au moins un échangeur de chaleur configuré pour contrôler la température du fluide soutiré.

L'invention concerne en particulier le ravitaillement de grandes quantités d'hydrogène liquide (généralement de l'ordre de 100 à 1 000 m3) destiné à être utilisé comme carburant de propulsion ou utilitaire pour de grandes applications maritimes.

Ces applications nécessitent d'être flexibles pour accepter différentes sources et/ou protocoles d'approvisionnement. De plus, parmi les contraintes auxquelles ces dispositifs doivent satisfaire il y a : contrôler les paramètres thermodynamiques du carburant dans le réservoir, à savoir la pression et la température, permettre de fournir du flux de gaz à un utilisateur et minimiser les pertes.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que l'ensemble de conduites comprend une première conduite de dérivation reliant la conduite de retour de gaz à la conduite d'alimentation, la première conduite de dérivation comprenant au moins une vanne de dérivation et étant configurée pour permettre le transfert de fluide de la conduite de retour de gaz vers la conduite d'alimentation simultanément à un remplissage du réservoir via la conduite de remplissage.

Par ailleurs, des modes de réalisation de l'invention peuvent comporter l'une ou plusieurs des caractéristiques suivantes :
- la conduite d'alimentation comprend un premier échangeur de chaleur disposé en aval du raccordement de première conduite de dérivation avec la conduite d'alimentation, le premier échangeur de chaleur étant configuré pour réchauffer le flux de gaz transitant dans la conduite d'alimentation,
- l'ensemble de conduites comprend une seconde conduite de dérivation ayant une première extrémité amont reliée en aval du premier échangeur de chaleur de la conduite d'alimentation et une seconde extrémité raccordée plus en aval sur la conduite d'alimentation, la seconde conduite de dérivation formant une boucle comprenant un passage dans l'enveloppe constituant un second échangeur de chaleur de réchauffage du fluide dans le réservoir,
- la seconde conduite de dérivation comprend une vanne,
- la seconde conduite de dérivation comprend, en aval du passage dans l'enveloppe interne, un troisième échangeur de chaleur de réchauffage,
- l'extrémité amont de la conduite d'alimentation est reliée à l'extrémité inférieure de l'enveloppe interne via un raccordement à l'extrémité aval de la conduite de remplissage raccordée à la partie inférieure de l'enveloppe,
- la conduite d'alimentation comprend une vanne de régulation de débit,
- au moins une partie des conduites et vannes de la circuiterie sont logées dans un boîtier relié au réservoir,
- le boîtier est isolé thermiquement sous vide et/ou à atmosphère contrôlée rempli ou ventilé avec un gaz neutre tel que l'azote.

L'invention concerne également un véhicule, par exemple bateau, comprenant une enceinte abritant, un moteur de propulsion ou un générateur d'électricité à partir d'un carburant gazeux, le véhicule comprenant un dispositif de stockage et de fourniture de fluide selon l'une quelconque des caractéristiques ci-dessus ou ci-dessous, dans lequel, le dispositif de stockage est configuré pour stocker le carburant du moteur ou du générateur, l'extrémité aval de la conduite d'alimentation étant reliée à une entrée du moteur ou un générateur.

Selon d'autres particularités possibles le véhicule comprend une interface de raccordement de transfert de fluide accessible à l'extérieure de l'enceinte, l'interface de raccordement de transfert de fluide étant reliée à la conduite de remplissage et à la conduite de retour de gaz via respectivement une paire de conduites de transfert.

L'invention concerne également un procédé, de stockage et de distribution d'un fluide cryogénique, par exemple parmi : l'hydrogène liquéfié, le gaz naturel liquéfié, utilisant un dispositif selon l'une quelconque des caractéristiques ci-dessus ou ci-dessous, ou un véhicule selon l'une quelconque des caractéristiques ci-dessus ou ci-dessous, le procédé comprenant une étape de remplissage du réservoir avec du liquide cryogénique via la conduite de remplissage de la circuiterie et, simultanément, une étape de transfert de gaz du réservoir vers la conduite d'alimentation via la conduite de retour de gaz.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] est une vue schématique et partielle illustrant un exemple de structure et de fonctionnement d'un dispositif selon l'invention,
[Fig. 2] est une vue schématique et partielle illustrant un exemple de structure et de fonctionnement d'un véhicule (bateau) utilisant un tel dispositif.

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

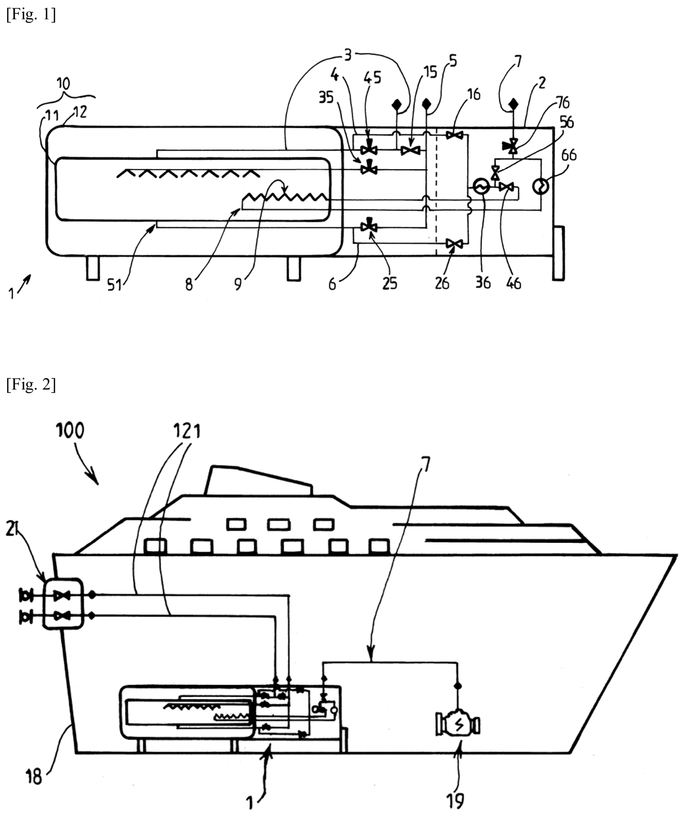

Le dispositif 1 de stockage et de fourniture de fluide illustré à la |Fig. 1] comprend un réservoir 10 de fluide cryogénique. Ce réservoir 10 comporte une enveloppe 11 interne définissant un volume de stockage de fluide cryogénique (par exemple LH2 ou LNG) et une enveloppe 12 externe disposée autour de l'enveloppe 11 interne avec un espacement isolé thermiquement sous vide.

Le dispositif 1 comprend une circuiterie munie d'un ensemble de conduites et d'un ensemble de vannes. Cette circuiterie est configurée pour permettre le transfert de fluide depuis ou vers le réservoir 10. Comme illustré, au moins une partie des conduites et vannes de la circuiterie sont logées dans un boîtier 2 relié au réservoir, par exemple un boîtier 2 isolé thermiquement sous vide et/ou à atmosphère contrôlée rempli ou ventilé avec un gaz neutre tel que l'azote par exemple.

L'ensemble de conduites comprend une conduite 5 de remplissage comprenant une extrémité amont destinée à être reliée à une source de fluide cryogénique (une source d'approvisionnement en fluide cryogénique liquéfié) et deux branches parallèles formant deux extrémités aval 50, 51 reliées respectivement aux partie supérieure et inférieure de l'enveloppe 11 interne. Comme illustré, ces deux branches parallèles sont munies chacune d'une vanne 35, 25 de régulation de débit (en variante une vanne trois voies pourrait être envisagée). La branche supérieure peut comporter une structure d'injection multiple (plusieurs orifices ou buses en pluie par exemple).

L'ensemble de conduites comprend en outre une conduite 3 de retour de gaz comprenant une extrémité amont reliée à la partie supérieure de l'enveloppe 11 interne et une extrémité aval destinée à être reliée à un système de récupération du gaz. La conduite 3 de retour de gaz peut comprendre une ou plusieurs vanne 45, 15 et par exemple une vanne 45 disposée entre l'enveloppe interne 11 et l'extrémité aval de la conduite 3 de retour. La conduite 3 de retour peut comporter une vanne 15 permettant d'isoler la conduite de retour de gaz de la conduite 5 de remplissage.

L'ensemble de conduites comprend en outre une conduite 6, 7 d'alimentation comprenant une extrémité amont reliée à l'enveloppe 11 interne et une extrémité aval destinée à être reliée à un utilisateur du fluide du réservoir 10 par exemple un moteur de combustion du gaz stocké.

La conduite 6, 7 d'alimentation comprenant au moins un échangeur 36 de chaleur configuré pour contrôler la température du fluide soutiré.

Selon une particularité avantageuse, l'ensemble de conduites comprend une première conduite 4 de dérivation reliant la conduite 3 de retour de gaz à la conduite 6, 7 d'alimentation. Cette première conduite 4 de dérivation comprend au moins une vanne 16 de dérivation et est configurée pour permettre le transfert de fluide de la conduite 3 de retour de gaz vers la conduite 7 d'alimentation simultanément à un remplissage du réservoir via la conduite 5 de remplissage.

C'est-à-dire que lors d'un remplissage du réservoir 10, le fluide fourni par une source est introduit dans l'enveloppe interne 11 en partie haute et/ou basse (extrémités 50, 51). Pendant ce remplissage, du gaz peut être évacué du haut de l'enveloppe 11 interne via la conduite 3 de retour de gaz vers la conduite 6, 7 de soutirage. Ceci est possible si la vanne 16 de dérivation est ouverte.

A noter que pour éviter que ce gaz évacué du haut de l'enveloppe 11 interne ne soit renvoyé vers le bas de l'enveloppe interne (via l'extrémité 6 de la conduite d'alimentation reliée à la partie inférieure de l'enveloppe 6 interne), un système de clapet anti retour (non représenté) peut être prévu entre la liaison de la conduite 3 de retour de gaz et la partie amont de la conduite d'alimentation.

Comme illustré, l'extrémité amont de la conduite 6, 7 d'alimentation peut être reliée à l'extrémité inférieure de l'enveloppe 11 interne via un raccordement à l'extrémité aval 51 de la conduite 5 de remplissage raccordée à la partie inférieure de l'enveloppe. En variante envisageable, la conduite 6, 7 d'alimentation pourrait être reliée à l'enveloppe 11 interne via une conduite dédiée (distincte de la conduite de remplissage).

Comme illustré, la conduite 6, 7 d'alimentation comprend de préférence un premier échangeur 36 de chaleur de réchauffage disposé en aval du raccordement de première conduite 4 de dérivation avec la conduite 6, 7 d'alimentation. Ce premier échangeur 36 de chaleur est par exemple configuré pour réchauffer le flux de gaz transitant dans la conduite 6, 7 d'alimentation, par exemple par échange de chaleur avec un fluide caloporteur plus chaud (air ou autre). Une vanne 26 peut être prévue en amont de l'échangeur 36 sur la conduite 6 d'alimentation raccordée à la partie inférieure du réservoir. Cette portion de conduite 6 avec la vanne 26 permet également de fournir un débit plus important au consommateur si nécessaire (en plus du gaz prélevé en partie supérieure du réservoir).

L'ensemble de conduites du dispositif 1 comprend de préférence une seconde conduite 8 de dérivation ayant une première extrémité amont reliée en aval de ce premier échangeur 36 de chaleur de la conduite 6, 7 d'alimentation et une seconde extrémité raccordée plus en aval sur la conduite 6, 7 d'alimentation. Cette seconde conduite 8 de dérivation forme une boucle comprenant un passage dans l'enveloppe 11 et constitue ainsi un second échangeur 9 de chaleur de réchauffage du fluide à l'intérieur de l'enveloppe 11 interne. C'est-à-dire que le fluide soutiré du réservoir et réchauffé dans le premier échangeur 36 de chaleur peut ensuite venir réchauffer l'intérieur du réservoir via le second échangeur 9 de chaleur avant d'alimenter l'extrémité aval de la conduite d'alimentation.

Comme illustré, la seconde conduite 8 de dérivation comprend également de préférence une vanne 46 de sélection. Cette vanne 46 de sélection permet d'autoriser ou non le fluide à transiter dans la boucle passant à l'intérieur du réservoir. Cette vanne 46 de sélection permet de diriger une partie ou la totalité des gaz chauds vers l'échangeur de chaleur 9 à l'intérieur du réservoir.

De plus, la seconde conduite 8 de dérivation peut comprendre, en aval du passage dans l'enveloppe 11 interne, un troisième échangeur 66 de chaleur de réchauffage permettant de réchauffer à nouveau le flux de fluide qui a pu se refroidir en passant dans la phase liquide du réservoir.

La conduite 6, 7 d'alimentation comprend de préférence une vanne 76 de régulation de débit, par exemple située en aval de la jonction avec la conduite 8 de dérivation qui part vers le second échangeur 9 de chaleur. Cette vanne 76 est par exemple une vanne de régulation finale en sortir en aval. Entre cette vanne 76 de régulation de régulation finale et l'échangeur 36 de chaleur une autre vanne 56 peut être prévue en série.

L'arrangement du dispositif 1 est une solution très flexible pour diverses exigences (à savoir, le mode et le protocole de ravitaillement, les opérations de fourniture de fluide...) .

La conduite 3 de retour de gaz permet l'évacuation de gaz de vaporisation en excès en vue de sa récupération et/ou vers un évent.

Des vannes de contrôle de débit 15 45 pour le remplissage et soutirage peuvent avoir des coefficients de débit déterminés réglables. La somme des coefficients de débits des deux vannes permet de contrôler le débit massique de transfert et la pression.

A pression de remplissage constante (pression du fluide injecté dans le réservoir), le débit de remplissage peut être contrôlé par la somme des coefficients de débit des différentes vannes (régulant l'entrée et la sortie de fluide). De même, la pression dans le réservoir peut être réglée en jouant sur la pression d'alimentation (remplissage) et la pression de retour (soutirage) par exemple en contrôlant l'asymétrie des coefficients de débit entre la vanne d'entrée et de sortie de fluide.

Toutes les vannes de contrôle de débit sont de préférence située dans le boîtier 2. Ceci permet de minimiser le nombre de vannes extérieures.

La [Fig. 2] illustre un bateau 100 comprenant un tel dispositif 1. Ce bateau 100 comprend une enceinte 18 ou coque abritant un moteur 19 de propulsion ou un générateur d'électricité à partir d'un carburant gazeux et un dispositif 1 de stockage et de fourniture de fluide tel que décrit ci-dessus. Ce dispositif 1 de stockage est configuré pour stocker le carburant du moteur 19 et/ou du générateur. L'extrémité aval de la conduite 6, 7 d'alimentation est en particulier reliée à une entrée du moteur 19 ou un générateur (centrale électrique de type pile à combustible par exemple).

Comme illustré, le bateau comprend au moins une interface 21 de raccordement de transfert de fluide accessible à l'extérieure de l'enceinte 18. Cette interface 21 de raccordement de transfert de fluide est reliée à la conduite 5 de remplissage et à la conduite 3 de retour de gaz via respectivement une paire de conduites 121 de transfert. Ainsi, le dispositif peut être relié à une unité de ravitaillement via une entrée de liquide et une sortie de retour de gaz d'évaporation.

La pression dans le réservoir peut être augmentée via un remplissage liquide par le bas et en limitant la sortie de gaz par le haut. La pression dans le réservoir peut être réduite via un remplissage liquide sous-refroidi par le haut.

La température dans le réservoir peut être augmentée via le second échangeur 9 de chaleur. A noter que ce système d'échangeur de chaleur 9 interne peut être surdimensionné pour répondre à une demande énergétique de carburant soutiré qui est supérieure à la demande d'une régulation de pression stable pendant la navigation du bateau.

Le dispositif 1 peut comprendre un débitmètre (par exemple du type Venturi) pour mesurer les performances de transfert de fluide.

Une vanne de dérivation peut être installée dans le boîtier 2 pour permettre le pré-refroidissement de tout ou partie des conduites de ravitaillement avant le ravitaillement du bateau.

## Revendications

1. Dispositif de stockage et de fourniture de fluide comprenant un réservoir (10) de fluide cryogénique, le réservoir (10) comportant une enveloppe (11) interne définissant un volume de stockage de fluide cryogénique et une enveloppe (12) externe disposée autour de l'enveloppe (11) interne avec un espacement isolé thermiquement sous vide, le dispositif (1) comprenant une circuiterie munie d'un ensemble de conduites et d'un ensemble de vannes, la circuiterie étant configurée pour permettre le transfert de fluide depuis ou vers le réservoir (10), dans lequel, l'ensemble de conduites comprend une conduite (5) de remplissage comprenant une extrémité amont destinée à être reliée à une source de fluide cryogénique et deux branches parallèles formant deux extrémités aval (50, 51) reliées respectivement aux partie supérieure et inférieure de l'enveloppe (11) interne, les deux branches parallèles étant munie chacune d'une vanne (35, 25) de régulation de débit, l'ensemble de conduites comprenant en outre une conduite (3) de retour de gaz comprenant une extrémité amont reliée à la partie supérieure de l'enveloppe (11) interne et une extrémité aval destinée à être reliée à un système de récupération du gaz, l'ensemble de conduites comprenant en outre une conduite (6, 7) d'alimentation comprenant une extrémité amont reliée à l'enveloppe (11) interne et une extrémité aval destinée à être reliée à un utilisateur du fluide du réservoir (10), la conduite (6, 7) d'alimentation comprenant au moins un échangeur (36; 66) de chaleur configuré pour contrôler la température du fluide soutiré, dans lequel l'ensemble de conduites comprend une première conduite (4) de dérivation reliant la conduite (3) de retour de gaz à la conduite (6, 7) d'alimentation, la première conduite (4) de dérivation comprenant au moins une vanne (16) de dérivation et étant configurée pour permettre le transfert de fluide de la conduite (3) de retour de gaz vers la conduite (7) d'alimentation simultanément à un remplissage du réservoir via la conduite (5) de remplissage.

2. Dispositif selon la revendication 1, **caractérisé en ce que** la conduite (6, 7) d'alimentation comprend un premier échangeur (36) de chaleur disposé en aval du raccordement de première conduite (4) de dérivation avec la conduite (6, 7) d'alimentation, le premier échangeur (36) de chaleur étant configuré pour réchauffer le flux de gaz transitant dans la conduite (6, 7) d'alimentation.

3. Dispositif selon la revendication 2, **caractérisé en ce que** l'ensemble de conduites comprend une seconde conduite (8) de dérivation ayant une première extrémité amont reliée en aval du premier échangeur (36) de chaleur de la conduite (6, 7) d'alimentation et une seconde extrémité raccordée plus en aval sur la conduite (6, 7) d'alimentation, la seconde conduite (8) de dérivation formant une boucle comprenant un passage dans l'enveloppe (11) constituant un second échangeur (9) de chaleur de réchauffage du fluide dans le réservoir.

4. Dispositif selon la revendication 3, **caractérisé en ce que** la seconde conduite (8) de dérivation comprend une vanne (46).

5. Dispositif selon la revendication 3 ou 4, **caractérisé en ce que** la seconde conduite (8) de dérivation comprend, en aval du passage dans l'enveloppe (11) interne, un troisième échangeur (66) de chaleur de réchauffage.

6. Dispositif selon l'une quelconque des revendications 1 à 5, **caractérisé en ce que** l'extrémité amont de la conduite (6, 7) d'alimentation est reliée à l'extrémité inférieure de l'enveloppe (11) interne via un raccordement à l'extrémité aval (51) de la conduite (5) de remplissage raccordée à la partie inférieure de l'enveloppe.

7. Dispositif selon l'une quelconque des revendications 1 à 6, **caractérisé en ce que** la conduite (6, 7) d'alimentation comprend une vanne (76) de régulation de débit.

8. Dispositif selon l'une quelconque des revendications 1 à 7, **caractérisé en ce qu'**au moins une partie des conduites et vannes de la circuiterie sont logées dans un boîtier (2) relié au réservoir (10).

9. Dispositif selon la revendication 8, **caractérisé en ce que** le boîtier (2) est isolé thermiquement sous vide et/ou à atmosphère contrôlée rempli ou ventilé avec un gaz neutre tel que l'azote.

10. Véhicule, par exemple bateau, comprenant une enceinte (18) abritant, un moteur (19) de propulsion ou un générateur d'électricité à partir d'un carburant gazeux, le véhicule (100) comprenant un dispositif (1) de stockage et de fourniture de fluide selon l'une quelconque des revendications 1 à 9, dans lequel, le dispositif (1) de stockage est configuré pour stocker le carburant du moteur (19) ou du générateur, l'extrémité aval de la conduite (6, 7) d'alimentation étant reliée à une entrée du moteur (19) ou un générateur.

11. Véhicule selon la revendication 10, **caractérisé en ce qu'**il comprend une interface (21) de raccordement de transfert de fluide accessible à l'extérieure de l'enceinte (18), l'interface (21) de raccordement de transfert de fluide étant reliée à la conduite (5) de remplissage et à la conduite (3) de retour de gaz via respectivement une paire de conduites (121) de transfert.

12. Procédé, de stockage et de distribution d'un fluide cryogénique, par exemple parmi : l'hydrogène liquéfié, le gaz naturel liquéfié, utilisant un dispositif selon l'une quelconque des revendications 1 à 9, ou un véhicule selon l'une quelconque des revendications 10 ou 11, le procédé comprenant une étape de remplissage du réservoir avec du liquide cryogénique via la conduite (5) de remplissage de la circuiterie (20) et, simultanément, une étape de transfert de gaz du réservoir vers la conduite (7) d'alimentation via la conduite (3) de retour de gaz.
